Europäisches Patentamt

European Patent Office

-- Office européen des brevets

(19)

(11) Veröffentlichungsnummer: **0 189 054**
**B1**

(12) **EUROPÄISCHE PATENTSCHRIFT**

(45) Veröffentlichungstag der Patentschrift: **26.09.90**

(51) Int. Cl.⁵: **B 60 P 7/13**

(21) Anmeldenummer: **86100187.3**

(22) Anmeldetag: **08.01.86**

(54) Vorrichtung zum Arretieren eines Containers.

(30) Priorität: **22.01.85 DE 3501969**

(43) Veröffentlichungstag der Anmeldung:
**30.07.86 Patentblatt 86/31**

(45) Bekanntmachung des Hinweises auf die
Patenterteilung:
**26.09.90 Patentblatt 90/39**

(84) Benannte Vertragsstaaten:
**AT BE DE FR GB IT NL SE**

(56) Entgegenhaltungen:
**DE-A-1 929 421**
**GB-A-1 543 711**
**US-A-1 407 594**
**US-A-3 709 455**
**US-A-3 722 714**

(73) Patentinhaber: **Westerwälder Eisenwerk
Gerhard GmbH
Ringstrasse Postfach 20
D-5241 Weitefeld/Sieg (DE)**

(72) Erfinder: **Gerhard, Helmut
Im Schlossteinchen 31
D-5241 Weitefeld (DE)**

(74) Vertreter: **Strehl, Peter, Dipl.-Ing. et al
Patentanwälte Strehl Schübel-Hopf Groening
Maximilianstrasse 54 Postfach 22 14 55
D-8000 München 22 (DE)**

Courier Press, Leamington Spa, England.

**Beschreibung**

Die Erfindung betrifft eine Vorrichtung zum Arretieren eines Containers, der mit unteren Rahmenelementen von rechteckigem Hohlprofil und jeweils eine Ecköffnung aufweisenden unteren Eckbeschlägen versehen ist, an Arretierungselementen.

Ein Container mit derartigen Rahmenelementen und Eckbeschlägen ist in DE—A—3 239 620 offenbart. Dabei handelt es sich um ein Konzept, das insbesondere für nur zwei- bis dreifach stapelbare mittelgroße Container mit Breiten von 2200 mm geeignet ist. Würde man an derartigen Mittelcontainern für Nennlasten von etwa 10 to (entspricht etwa 100 kN) die für international genormte Großcontainer mit Nennlasten bis zu über 30 to (entspricht etwa 300 kN) und mindestens sechsfache Vollstapelung vorgesehenen Eckbeschläge nach ISO 1161 anbringen, die entsprechend schwer gestaltet sind und entsprechend dimensionierte Rahmenelemente erfordern, so wären derartige Rahmenelemente und Eckbeschläge für Mittelcontainer um den Faktor 3 oder mehr überdimensioniert. Der in der genannten Offenlegungschrift beschriebene Eckbeschlag ist dagegen leichter und kleiner gestaltet und in Verbindung mit entspechend leichteren Rahmenelementen verwendbar, wie sie für Mittelcontainer ausreichen; infolgedessen entspricht er aber auch nicht der ISO 1161 und läßt sich auch nicht ohne weiteres in Verbindung mit den in dieser Norm vorgesehenen Drehschlössern verwenden, wie sie an den Ladeflächen von für den Transport genormter Container bestimmten Fahrzeugen vorgesehen sind. Dazu kommt, daß die beschriebenen Mittelcontainer in ihren Außenmaßen von den Abständen abweichen, in denen die genannten Drehschlösser oder Zapfen an derartigen Fahrzeugen angebracht sind.

Der Erfindung liegt die Aufgabe zugrunde, Container der eingangs genannten Art an Arretierungselementen, die etwa an Fahrzeugladeflächen oder auf Schiffsdecks vorgesehen sind, zu arretieren. Eine speziellere Aufgabe der Erfindung besteht darin, Container mit nicht der internationalen Norm ISO 1161 entsprechenden Eckbeschlägen an genormten Arretierungselementen, insbesondere Drehschlössern nach ISO 1161, zu arretieren.

Die erfindungsgemäße Lösung dieser Aufgabe ist im Kennzeichenteil des Patentanspruchs 1 angegeben. Die danach vorgesehenen, in den Rahmenelementen des Containers verschiebbaren und durch die Ecköffnungen der jeweiligen Eckbeschläge teilweise herausführbaren Riegel stellen eine Art von Übergangsstücken dar, die in dem zum Eingriff mit den Arretierungselementen bestimmten Bereich einerseits entsprechend den jeweiligen, in der Regel genormten Arretierungselementen gestaltete Aussparungen haben und andererseits entsprechend dem jeweils vorgegebenen Abstand zwischen Paaren aus je zwei quer zur Fahrtrichtung vorgesehenen Arretierungselementen dimensionierbar sind. Durch ihre Unterbringung innerhalb der Rahmenelemente lassen sich die Riegel als wirtschaftliche und unkomplizierte Zubehörteile der Container gestalten.

Vorteilhafte Weiterbildungen der Erfindung sind in den Unteransprüchen gekennzeichnet. Dabei betrifft Anspruch 2 eine besonders einfache und gewichtssparende Gestaltung der Riegel; Ansprüche 3 bis 6 einfache und betriebssichere Maßnahmen, die ein Zurückweichen der Riegelplatte aus der Verriegelungsstellung verhindern; Ansprüche 7 bis 9 Maßnahmen zum Niveau-Ausgleich im Bereich der Riegelplatte; Anspruch 10 und 11 Gestaltungen, durch die die Riegelplatten innerhalb der Rahmenelemente unverlierbar gehalten werden; Anspruch 12 eine Meßnahme, die ein Einsetzen der Riegelplatte in den fertigen Containerrahmen gestattet; und Anspruch 13 eine Versteifungsmaßnahme. Die Ausgestaltung der Erfindung nach Anspruch 14 erbringt den Vorteil, daß sich die Riegelplatte in Richtung beider, mit dem betreffenden Eckbeschlag verbundenen unteren Rahmenelementen abstützen kann und damit der Container noch fester an dem betreffenden Arretierungselement verankert werden kann. Eine weitere Verbesserung der Verankerung ergibt sich in der Weiterbildung nach Anspruch 15, die insbesondere in Verbindung mit einem Drehschloß als Arretierungselement günstig ist, wobei dieses Drehschloß nach Durchstecken durch die Öffnung in dem Riegel vordreht werden kann und damit eine Sicherung des Containers auch gegen Kippen erreicht wird. Die Ausgestaltungen nach den Ansprüchen 17 bis 19 geben bevorzugte Möglichkeiten der Unterbringung eines breiteren Riegels in Querschnitt des Rahmenelements an.

Bevorzugte Ausführungsbeispiele der Erfindung werden nachstehend anhand der Zeichnungen näher erläutert. In den Zeichnungen zeigt

Fig. 1 eine Draufsicht auf eine Riegelplatte gemäß einem ersten Ausführungsbeispiel,

Fig. 2 einen Querschnitt durch die Riegelplatte gemäß der Linie II—II nach Fig. 1,

Fig. 3 eine Darstellung der Riegelplatte nach Fig. 1 in ihrem in ein Container-Rahmenelement eingesetzten Zustand in der Ruhestellung,

Fig. 4 eine perspektivische Darstellung der Anordnung nach Fig. 3, jedoch mit der Riegelplatte in ihrer arretierten Stellung,

Fig. 5 eine der Fig. 1 ähnliche Draufsicht auf eine Riegelplatte gemäß einem zweiten Ausführungsbeispiel,

Fig. 6 eine Darstellung einer Containerecke mit der Riegelplatte nach Fig. 5 in Arretierungsstellung,

Fig. 7 eine Seitenansicht der Riegelplatte nach Fig. 5,

Fig. 8, 10 und 12, Draufsichten auf Riegelplatten gemäß weiteren Ausführungsbeispielen, und

Fig. 9, 11 und 13 schematische Stirnansichten von Container-Rahmenelementen, in die jeweils die Riegelplatten gemäß Fig. 8, 10 bzw. 12 in Ruhestellung eingeschoben gezeigt sind.

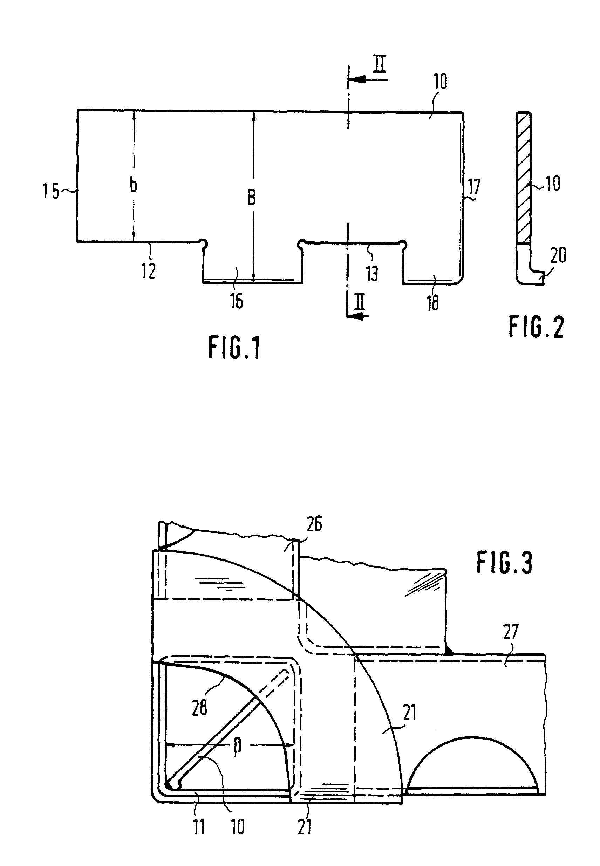

Die in Fig. 1 und 2 gezeigte Riegelplatte 10 aus Flachstahl hat eine Gesamtbreite B, die etwas geringer ist als das lichte Diagonalmaß der im Querschnitt rechteckigen, insbesondere quadratischen, aus Fig. 3 ersichtlichen Container-Rahmenelemente 11. An einer ihrer beiden Längsseiten weist die Riegelplatte 10 zwei Ausschnitte 12, 13 auf, von denen der eine Ausschnitt 12 bis zur Hinterkante 15 der Riegelplatte 10 verläuft, während der andere Ausschnitt 13 mit dem Ausschnitt 12 einen Steg 16 und mit der Vorderkante 17 der Riegelplatte 10 einen Steg 18 bildet. Die Tiefe der Ausschnitte 12 und 13 ist so bemessen, daß die verminderte Breite b der Riegelplatte 10 etwas geringer ist als die lichte Breite β des Rahmenelements 11 (Fig. 3).

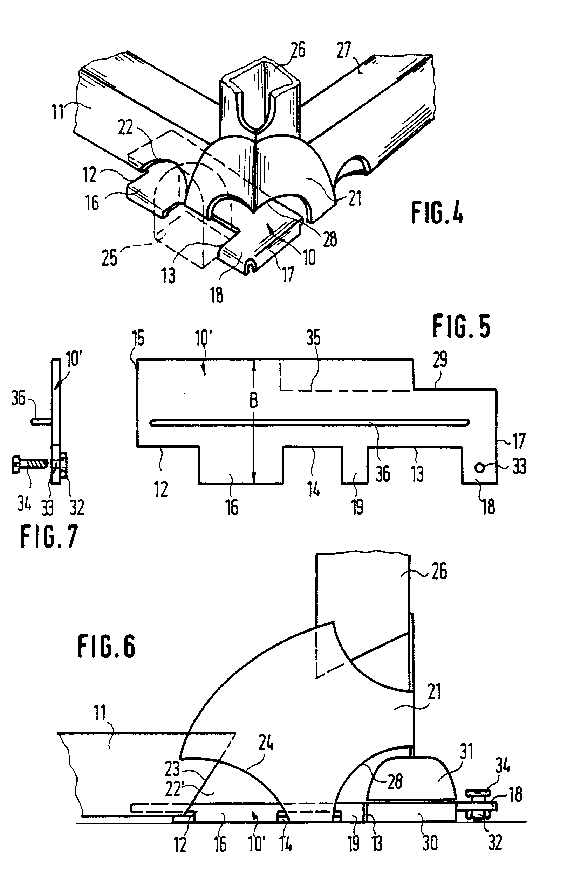

Wie in Fig. 2 gezeigt, weist die Riegelplatte 10 im Bereich der Stege 16 und 18 und längs der Vorderkante 17 Verdickungen 20 auf, die durch rechtwinklige Abkantung gebildet sind. Stattdessen können auch an den Stegen Wulste oder Sicken vorgesehen sein. Die Stärke dieser Verdickungen ist im wesentlichen gleich der Summe aus den Materialstärken der unteren Schenkel des Rahmenelements 11 und des Eckbeschlags 21 (Fig. 3). Wie aus Fig. 4 und 6 ersichtlich, haben die so bemessenen Verdickungen 20 die Wirkung, daß die durch sie definierte unterste Fläche der Riegelplatte 10 in der gleichen Ebene liegt wie die untere Fläche des Eckbeschlags 21. Eine weitere Gestaltungsmöglichkeit für die Verdickungen besteht in den weiter unten anhand von Fig. 7 beschriebenen Schweißmuttern.

Die Breite des Stegs 16 der in Fig. 1 gezeigten Riegelplatte ist so bemessen, daß dieser Steg 16 durch ein Kantenloch 22 hindurchführbar ist, das gemäß Fig. 4 an der unteren Außenkante des Rahmenelements 11 vorgesehen ist. Je nach der Gestaltung des Eckbeschlags 21 kann auch dieses Kantenloch 22 in dem Eckbeschlag 21 selbst vorgesehen sein oder durch entsprechende Ausschnitte 23 am Rahmenelement 11 und 24 am Eckbeschlag 21 gebildet sein, wie dies in Fig. 6 gezeigt ist.

Die Breite und Form des Ausschnitts 13 richtet sich nach der Breite und Form des Arretierungselements, das in Fig. 4 gestrichelt angedeutet und als fester Zapfen 25 etwa an der Ladefläche eines Fahrzeugs angenommen ist, gegenüber dem der die Rahmenelemente 11, den Eckbeschlag 21 und die Riegelplatte 10 enthaltende Container arretiert werden soll. Derartige feste Zapfen sind insbesondere an Ladeflächen von Eisenbahnwaggons vorgesehen, bei denen eine Fixierung in vertikaler Richtung zur Aufnahme von Vertikalbeschleunigungen nicht erforderlich ist. Der Zapfen 25 kann insbesondere so gestaltet sein, daß er in die entsprechenden unteren Aufnahmelöcher von Standard-Eckbeschlägen nach ISO 1161 paßt. Der Ausschnitt 13 an der Riegelplatte 10 ist so gestaltet, daß er diesen Zapfen 25 C-förmig an drei Seiten umgreift.

Damit ist die in Fig. 4 durch die Rahmenelemente 11, 26 und 27 und den Eckbeschlag 21 dargestellte Containerecke in drei Richtungen fixiert, nämlich in beiden Richtungen der Längserstreckung des Rahmenelements 11 sowie in einer Richtung der Längserstreckung des Rahmenelements 27. Die Arretierung in der vierten Horizontalrichtung erfolgt dadurch, daß im Bereich des anderen Endes des Rahmenelements 27 in Fig. 4 eine weitere Riegelplatte 10 vorgesehen ist, die einen zu dem Ausschnitt 13 der in Fig. 4 sichtbaren Riegelplatte 10 entgegengesetzt sich öffnenden Ausschnitt aufweist und mit diesem einen dort angeordneten Zapfen umgreift.

Fig. 3 zeigt die Riegelplatte 10 im Ruhezustand, in dem diese in das Rahmenelement 10 eingeschoben ist. In ihrer Diagonalstellung hat sie vollständig in dem Rahmenelement 11 Platz. An dem dem Eckbeschlag 21 zugewandten Ende des Rahmenelements 11 oder auch innerhalb des Rahmenelements können mit entsprechenden (nicht gezeigten) Formgebungen an der Riegelplatte 10 zusammenwirkende (ebenfalls nicht gezeigte) Formgebungen vorhanden sein, die verhindern, daß die Riegelplatte 10 im Ruhezustand zu weit in das Rahmenelement hineinrutscht.

Ein Herausfallen der Riegelplatte 10 wird dadurch verhindert, daß die gemäß Fig. 3 beispielsweise viertelkreisförmig gestaltete Ecköffnung 28 des Eckbeschlags 21 derart bemessen ist, daß das verbleibende lichte Radiusmaß kleiner ist als die Gesamtbreite B der Riegelplatte 10. Bei Fertigung des Containers wird die Riegelplatte 10 vor dem Aufbringen des Eckbeschlags 21 in das Rahmenelement 11 eingeschoben.

In Fig. 3 ist das Rahmenelement 11 mit quadratischem Querschnitt gezeigt. Alternativ können auch untere Rahmenelemente mit rechteckigem Querschnitt verwendet und so eingebaut werden, daß die längere Seite senkrecht steht. In diesem Fall lassen sich Riegelplatten mit größerer Gesamtbreite B verwenden. Da die lichte Breite ß des Rahmenelements und damit die verminderte Breite b der Riegelplatte unverändert ist, wird in diesem Fall das Maß, um das die Stege 16 und 18 herausragen größer und damit das Arretierungselement besser umschlossen.

Beim Betrieb wird der zu arretierende Container auf die betreffende Ladefläche derart zwischen zwei längs einer Fahrzeugquerachse angeordnete Zapfen 25 abgesetzt, daß diese zwei Eckbeschlägen 21 benachbart sind. Sodann werden die bedien Riegelplatten 10 in ihrer in Fig. 3 gezeigten diagonalen Stellung so weit herausgezogen, daß der Steg 16 durch das Kantenloch 22 hinduchtreten und der Ausschnitt 13 den jeweiligen Zapfen 25 umgreifen kann. In dieser Stellung fällt die Riegelplatte 10 in ihre in Fig. 4 gezeigte horizontale Stellung, in der sie den Container bezüglich des Zapfens 25 arretiert. Dabei kann die Vorderkante 17 der Riegelplatte 10 an der entsprechenden Innenwand des Eckbeschlags anschlagen oder kurz vor diesem enden. In dieser Stellung liegt die Riegelplatte 10 mit ihrer unteren Hauptfläche flach auf dem unteren Schenkel des Rahmenelements 11 und mit der unteren Fläche der Verdickungen 20 auf der Ladefläche auf.

Die Verdickung 20 kann auch so stark sein, daß sie der Riegelplatte 10 in der in Fig. 4 gezeigten Arretierungsstelle ein leichtes Gefälle nach innen verleiht, das einem unbeabsichtigten Verschwenken der Riegelplatte 10 in die nicht-arretierte Stellung entgegenwirkt.

Die in Fig. 5 gezeigte Ausführungsform der Riegelplatte 10' unterscheidet sich von der nach Fig. 1 dadurch, daß ein dritter, mittlerer Ausschnitt 14 vorgesehen ist, der mit dem hinteren Ausschnitt 12 den Steg 16 und mit dem vorderen Ausschnitt 13 einen weiteren Steg 19 bildet. Ferner ist die Riegelplatte 10' nach Fig. 5 an der gegenüberliegenden Längsseite mit einer bis zur Vorderkante 17 reichenden Aussparung 29 versehen, die bewirkt, daß sich die Riegelplatte 10' in ihrer schrägen Stellung um eine entsprechende Länge durch die Ecköffnung 28 aus dem Eckbeschlag 21 herausführen läßt.

In der in Fig. 6 gezeigten Arretierungsstellung tritt der Steg 16 der Riegelplatte 10' durch das von den Ausschnitten 23 und 24 am Rahmenelement 11 bzw. am Eckbeschlag 21 gebildete Kantenloch 22', und der Ausschnitt 13 umgreift den Fuß 30 des in diesem Ausführungsbeispiel als Drehschloß 31 nach ISO 1161 gestalteten Arretierungselements, wobei der Steg 19 zwischen die Ecköffnung 28 und diesen Fuß 30 paßt. Dadurch, daß sich die Riegelplatte 10' ein Stück weit aus dem Eckbeschlag 21 herausführen läßt und sich der Ausschnitt 13 in der herausgezogenen Arretierungsstellung entsprechend weit außen befindet, wird nun der Container bezüglich dem Arretierungselement derart fixiert, daß sich dieses vollständig im Bereich der Ecköffnung 28 befindet. Ist es, wie in Fig. 6 angenommen, als Drehschloß gestaltet, so läßt sich dessen Kopf verdrehen und bewirkt nun eine Arreiterung der Riegelplatte 10' und damit des Containers auch in Vertikalrichtung. Eine derartige Drehschloß-Arretierung gegen Vertikalbeschleunigungen ist insbesondere beim Containertransport auf Ladeflächen von Straßenfahrzeugen angezeigt.

In Verbindung mit einer Arretierung an einem in Fig. 6 gezeigten Drehschloß kann es zweckmäßig sein, die Verdickung der Riegelplatte 10' anstelle der in Fig. 2 bei 20 gezeigten Abkantungen durch entsprechend dicke Muttern 32 (Fig. 7) herbeizuführen, die an die Unterseite der Riegelplatte 10' im Bereich der Stege 16, 18, 19 angeschweißt sind. Wie in Fig. 5 gezeigt, ist ferner der Steg 18 mit einer Bohrung 32 versehen, die mit der Gewindebohrung der Mutter 32 fluchtet. Ist nun die Riegelplatte 10' mit Hilfe des Drehschlosses 31 nach Fig. 6 verriegelt worden, so läßt sich diese Verriegelung zusätzlich durch eine von oben her durch die Mutter 32 hindurch geschraubte und unten aus dieser austretende Spannschraube 34 verspannen. Die gleiche Verspannung kann bei Bedarf auch im Bereich des Steges 19 nach Fig. 5 und 6 vorgesehen werden. Bei einem derartigen Anheben der Riegelstege mit Hilfe von Spannschrauben ergibt sich ferner eine für die Festigkeit der Arretierung günstige Keilwirkung zwischen den seitlichen Kanten der Stege 16, 19 und den benachbarten Begrenzungskanten des Kantenlochs 22 und der Ecköffnung 28.

Wie in Fig. 5 mit gestrichelten Linien angedeutet, kann die Eckaussparung 29 um ein erhebliches Stück nach hinten verlängert sein, so daß der diese verlängerte Ecköffnung 35 nach hinten begrenzende Schnitt etwa mit der zwischen dem Steg 16 und der Aussparung 14 definierten Kante fluchtet. Bei dieser Formgebung läßt sich die Riegelplatte 10' auch nach Befestigen des Eckbeschlags 21 noch durch dessen Ecköffnung 28 hindurch in das Rahmenelement 11 hineinmanövrieren, wird aber auch dann gegen ein unbeabsichtigtes Herausfallen mit großer Sicherheit gehalten. Die bei dieser Formgebung nur noch im Bereich des Steges 16 verbleibende Gesamtbreite B reicht für die ordnungsgemäße Funktion der Riegelplatte 10' aus. Zur Erhöhung der Steifigkeit der Riegelplatte 10' kann ferner an ihrer Oberseite eine in ihrer Längsrichtung verlaufende Versteifungsrippe 36 vorgesehen sein. Diese Rippe kann bei Bedarf auch in die Bereiche der Stege 16, 18 und 19 abzweigende Teile aufweisen. Eine ähnliche Verstärkungsrippe kann auch bei der Riegelplatte 10 nach Fig. 1 und 2 zweckmäßig sein, sofern die erforderliche Steifigkeit nicht durch die Materialstärke der Platte erreicht wird.

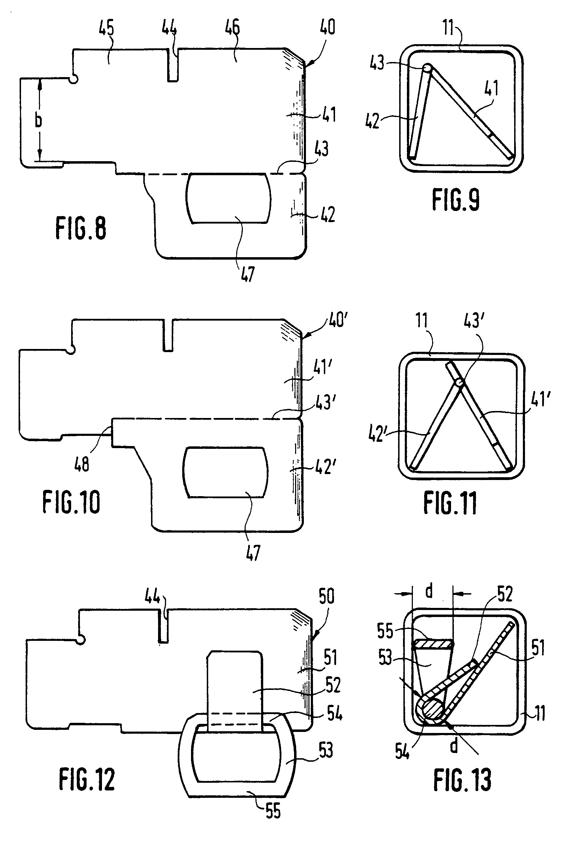

Die in Fig. 8 gezeigte Riegelplatte 40 besteht aus zwei Platten 41 und 42, die über ein nur schematisch gezeigtes Scharnier 43 miteinander verbunden sind. Die Platte 41 weist an ihrem linken Ende einen Abschnitt der Breite b auf, die dem Maß b in Fig. 1 entspricht und etwas geringer ist als die in Fig. 3 eingezeichnete lichte Breite ß des Rahmenelements 11. Der Hauptteil der Platte 41 hat eine größere Breite und weist einen Schlitz 44 auf, der von der dem Scharnier 43 gegenüberliegenden Kante der Platte 41 ausgeht und damit an dieser Kante zwei Vorsprünge 45 und 46 erzeugt. Die Platte 42 ist mit einer länglichen Öffnung 47 versehen, die so gestaltet ist, daß ein Drehschloß nach ISO 1161 hindurchpaßt. Bei der Ausführungsform nach Fig. 8 verläuft der Achse des Scharniers 43 längs der Innenkante dieser Öffnung 47.

Fig. 9 zeigt, wie sich die Riegelplatte 40 nach Fig. 8 in ihrer Ruhestellung vollständig in das Rahmenelement 11 einschieben läßt. Zur Verankerung wird die Riegelplatte 40 so weit aus dem Rahmenelement herausgezogen, daß der Vorsprung 45 in denjenigen Bereich gelangt, in dem das zu dem Rahmenelement 11 senkrecht verlaufende untere Rahmenelement 27 an dem Eckbeschlag 21 endet. Wird nun die Riegelplatte 40 in die gestreckte Form auseinandergeklappt, so greift die Wandung des Eckbeschlags 21 in den Schlitz 44 ein. Der Vorsprung 46 befindet sich dabei außerhalb des Eckbeschlags 21. Die Öffnung 47 umgreift das Arretierungselement; handelt es sich dabei um ein Drehschloß, so wird dieses anschließend um 90° gedreht, um die Riegelplatte 40 und damit den Container sowohl gegen Verschieben als auch gegen Kippen zu sichern.

Die in Fig. 10 gezeigte Riegelplatte 40' unterscheidet sich von der Riegelplatte 40 nach Fig. 8 dadurch, daß die Achse des Scharniers 43' außerhalb der Öffnung 47 so gelegt ist, daß die beiden Platten 41' und 42' im wesentlichen gleiche Breite erhalten. In diesem Fall endet das Scharnier 43' links an einem Einschnitt 48. Fig. 11 zeigt dabei die Unterbringung der Riegelplatte 40' nach Fig. 10 in der Ruhestellung innerhalb des Rahmenelements 11.

Die Riegelplatte 50 nach Fig. 12 und 13 weist eine Platte 51 auf, deren Hauptteil in seiner Form im wesentlichen der Platte 41 nach Fig. 8 entspricht. An der dem Schlitz 44 gegenüberliegenden Kante der Platte 51 ist ein Lappen 52 angeformt, der einen Ring 53 durchsetzt und auf den Hauptteil der Platte 51 zurückgefaltet ist. Wie in Fig. 13 gezeigt, ist der Querschnitt des inneren Schenkels 54 des Rings 53 kreisförmig, so daß der Ring 53 an der Platte 51 schranierartig drehbar eingehängt ist. Der äußere Schenkel 55 des Rings 53 hat eine Dicke, die gleich ist der Summe aus dem Durchmesser des inneren Schenkels 54 und der zweifachen Dicke der Platte 51. Dieses Maß ist in Fig. 13 jeweils mit d bezeichnet. Es ist so gewählt, daß der äußere Ringschenkel 55 in der Arbeitsstellung der Riegelplatte 50 senkrecht auf der Unterlage aufsteht, wenn die Platte 51 flach auf der Innenfläche des Rahmenelements 11 aufliegt. Das unter Berücksichtigung der Dicke des das Scharnier bildenden Lappens 52 vorhandene lichte Maß des Rings 53 entspricht der Form der Öffnung 47 in den Riegelplatten nach Fig. 8 und 10.

In sämtlichen oben beschriebenen Ausführungsabeispielen ist angenommen worden, daß die Riegelplatte dann, wenn sie nicht zum Arretieren des Containers benötigt wird, in das Rahmenelement 11 eingeschoben und dort gegen Herausfallen gesichert wird. Alternativ ist es auch möglich, das Rahmenelement 11 oder das Rahmenelement 27 in der Nähe des Eckbeschlags 21 an der oberen Innenkante mit einem Schlitz zu versehen und durch diesen hindurch die Riegelplatte in das betreffende Rahmenelement einzustecken. Diese Art der Aufbewahrung eignet sich dann, wenn die Gesamtbreite der Riegelplatte größer ist als das lichte Diagonalmaß des Rahmenelements und die Riegelplatte kein Scharnier aufweist.

## Patentansprüche

1. Vorrichtung zum Arretieren eines Containers, der mit unteren Rahmenelementen (11) von rechteckigem Hohlprofil und jeweils eine Eicköffnung (28) aufweisenden unteren Eckbeschlägen (21) versehen ist, an Arretierungselementen (25, 31), gekennzeichnet durch in den Rahmenelementen (11) verschiebbare Riegel (10, 40, 50) mit jeweils einem durch die Eicköffnung (28) eines Eckbeschlags (21) herausführbaren Abschnitt (18, 19, 42, 53) der eine Aussparung (13, 47) zum Eingriff mit einem Arretierungselement (25, 31) aufweist.

2. Vorrichtung nach Anspruch 1, dadurch gekennzeichnet, daß der Riegel als im wesentlichen ebene längliche Platte (10) mit seitlichen Ausschnitten (12...14) ausgebildet ist.

3. Vorrichtung nach Anspruch 2, dadurch gekennzeichnet, daß die Gesamtbreite (B) der Platte (10) dem lichten Diagonalmaß des Rahmenelements (11) und die um die Tiefe der seitlichen Ausschnitte (12...14) verminderte Breite (b) der lichten Breite (β) des Rahmenelements (11) entspricht.

4. Vorrichtung nach Anspruch 3, dadurch gekennzeichnet, daß die Platte (10) an einer Längsseite zwei Ausschnitte (12, 13) aufweist, von denen der eine (12) bis zu ihrer von dem Eckbeschlag (21) abgewandten Hinterkante (15) reicht und der andere (13) eine dem Arretierungselement (25, 31) entsprechende Breite hat.

5. Vorrichtung nach Anspruch 4, wobei das Rahmenelement (11) und/oder der Eckbeschlag (21) in der vom Container abgewandten Außenkante ein Kantenloch (22) aufweist, dadurch gekennzeichnet, daß der zwischen den beiden Ausschnitten (12, 13 bzw. 12, 14) der Platte (10) gebildete Steg (16) eine der lichten Länge des Kantenlochs (22) entsprechende Breite hat.

6. Vorrichtung nach Anspruch 5, dadurch gekennzeichnet, daß die Platte (10') an der genannten Längsseite drei Ausschnitte (12...14) aufweist, von denen zwei (13, 14) einen zwischen eine Kante der Eicköffnung (28) des Eckbeschlags (21) und die dieser Kante zugewandte Fläche des Arretierungselements (31) eingreifenden Steg (19) bilden.

7. Vorrichtung nach einem der Ansprüche 2 bis 6, dadurch gekennzeichnet, daß die Platte (10) im Bereich der durch die Ausschnitte (12...14) gebildeten Stege (16, 18, 19) auf ihrer Unterseite eine Verdickung (20, 32) aufweist.

8. Vorrichtung nach Anspruch 7, dadurch gekennzeichnet, daß die Verdickung (20, 32) der Summe der Materialstärken der unteren Schenkel des Eckbeschlags (21) und des Rahmenelements (11) entspricht.

9. Vorrichtung nach Anspruch 7 oder 8, dadurch gekennzeichnet, daß die Verdickung durch eine an der Unterseite eines Steges (18) angeschweißte Mutter (32) gebildet ist, in die eine Spannschraube (34) einschraubbar ist.

10. Vorrichtung nach einem der Ansprüche 2 bis 9, dadurch gekennzeichnet, daß die Platte (10) einen an der Innenseite der von dem Rahmenelement (11) abgewandten Fläche des Eckbeschlags (21) angreifenden Anschlag (17) aufweist.

11. Vorrichtung nach Anspruch 10, wobei die Eicköffnung (28) des Eckbeschlags (21) durch Viertelkreisbögen gebildet ist, dadurch gekennzeichnet, daß das lichte Radiusmaß der Eicköffnung (28) kleiner ist als die Gesamtbreite (B) der Platte (10).

12. Vorrichtung nach einem der Ansprüche 4 bis 11, dadurch gekennzeichnet, daß die Platte (10') an ihrer den Ausschnitten (12, 13) gegenüberliegenden Längsseite eine bis zu ihrer Vorderkante (17) reichende Eckaussparung (35) aufweist.

13. Vorrichtung nach einem der Ansprüche 2 bis 12, dadurch gekennzeichnet, daß die Platte (10') auf ihrer Oberseite eine Versteifungsrippe (36) aufweist.

14. Vorrichtung nach Anspruch 2, dadurch gekennzeichnet, daß die Platte (40, 50) an ihrer der Aussparung zum Eingriff mit dem Arretierungselement (25, 31) gegenüberliegenden Kante eine Anformung (44, 45) zum Eingriff mit dem Eckbeschlag (21) im Bereich desjenigen Rahmenelements (27) aufweist, das senkrecht zu dem die Platte (40) verschiebbar aufnehmenden Rahmenelement (11) verläuft.

15. Vorrichtung nach Anspruch 1 oder 14, dadurch gekennzeichnet, daß die Aussparung als eine das Arretierungselement (25, 31) vollständig umgreifende Öffnung (47) ausgebildet ist.

16. Vorrichtung nach Anspruch 15, dadurch gekennzeichnet, daß der Riegel (40, 50) ein in Verschieberichtung verlaufendes Scharnier (43, 53, 54) aufweist.

17. Vorrichtung nach Anspruch 16, dadurch gekennzeichnet, daß das Scharnier (43, 53, 54) längs der inneren Begrenzungslinie der Öffnung (47) verläuft.

18. Vorrichtung nach Anspruch 17, dadurch gekennzeichnet, daß die Öffnung von einem Ring (53) gebildet ist, dessen innerer Schenkel (54) in eine von einem umgefalteten Teil (52) der Platte (51) gebildete Öse eingehängt ist.

19. Vorrichtung nach Anspruch 18, dadurch gekennzeichnet, daß die Dicke (d) des äußeren Ringschenkels gleich ist der Summe aus der Dicke des inneren Ringschenkels (54) und der doppelten Dicke des umgefalteten Plattenteils (52).

## Revendications

1. Dispositif de fixation d'un conteneur, qui est équipé d'éléments de châssis inférieurs (11) en un profilé creux rectangulaire et de ferrures d'angle inférieures (21) présentant chacune une ouverture d'angle (28), à des éléments de fixation (25, 31), caractérisé par des verrous (10, 40, 50) pouvant coulisser dans les éléments de châssis (11) avec chacun un tronçon (18, 19, 42, 53) pouvant être sorti à travers l'ouverture d'angle (28) d'une ferrure d'angle (21) et qui présente un évidement (13, 47) pour un engagement avec un élément de fixation (25, 31).

2. Dispositif selon la revendication 1, caractérisé en ce que le verrou est réalisé sous la forme d'une plaque oblongue sensiblement plane (10) avec des découpures latérales (12...14).

3. Dispositif selon la revendication 2, caractérisé en ce que la largeur totale (B) de la plaque (10) correspond à la diagonale intérieure de l'élément de châssis (11) et la largeur (b) diminuée de la profondeur des découpures latérales (12...14) correspond à la largeur intérieure (β) de l'élément de châssis (11).

4. Dispositif selon la revendication 3, caractérisé en ce que la plaque (10) présente sur un côté longitudinal deux découpures (12, 13), dont l'une (12) s'étend jusqu'à son bord postérieur (15) écarté de la ferrure d'angle (21) et dont l'autre (13) possède une largeur correspondant à l'élément de fixation (25, 31).

5. Dispositif selon la revendication 4, dans lequel l'élément de châssis (11) et/ou la ferrure d'angle (21) présente un trou de bord (22) dans le bord extérieur éloigné du conteneur, caractérisé en ce que l'âme (16), formée entre les deux découpures (12, 13; 12, 14, respectivement) de la plaque (10), possède une largeur correspondant à la longueur intérieure du trou de bord (22).

6. Dispositif selon la revendication 5, caractérisé en ce que la plaque (10') présente sur le côté longitudinal précité trois découpures (12...14), dont deux (13, 14) forment une âme (19) pénétrant entre un bord de l'ouverture d'angle (28) de la ferrure d'angle (21) et la surface de l'élément de fixation (31) tournée vers ce bord.

7. Dispositif selon l'une quelconque des revendications 2 à 6, caractérisé en ce que la plaque (10) présente, à proximité des âmes (16, 18, 19) formées par les découpures (12...14), un renflement (20, 32) sur son côté inférieur.

8. Dispositif selon la revendication 7, caractérisé en ce que le renflement (20, 32) correspond à la somme des épaisseurs des branches inférieures de la ferrure d'angle (21) et de l'élément de châssis (11).

9. Dispositif selon la revendication 7 ou 8, caractérisé en ce que le renflement est formé par un écrou (32) soudé au côté inférieur d'une âme (18), dans lequel peut être vissée une vis de serrage (34).

10. Dispositif selon l'une quelconque des revendications 2 à 9 caractérisé en ce que la plaque (10) présente une butée (17) s'appliquant au côté intérieur de la surface éloignée de l'élément de châssis (11) de la ferrure d'angle (21).

11. Dispositif selon la revendication 10, dans lequel l'ouverture d'angle (28) de la ferrure d'angle (21) est formée par des quarts de circonférence, caractérisé en ce que le rayon intérieur de l'ouverture d'angle (28) est inférieur à la largeur totale (B) de la plaque (10).

12. Dispositif selon l'une quelconque des revendications 4 à 11, caractérisé en ce que la plaque (10') présente, sur son côté longitudinal en vis-à-vis des découpures (12, 13), un évidement d'angle (35) allant jusqu'à son bord antérieur (17).

13. Dispositif selon l'une quelconque des revendications 2 à 12, caractérisé en ce que la plaque (10') présente une nervure de renfort (36) sur son côté supérieur.

14. Dispositif selon la revendication 2, caractérisé en ce que la plaque (40, 50) présente sur son bord en vis-à-vis de l'évidement, en vue de l'engagement avec l'élément de fixation (25, 31), une conformation (44, 45) pour l'engagement avec la ferrure d'angle (21) à proximité de l'élément de châssis (27) s'étendant perpendiculairement jusqu'à l'élément de châssis (11) recevant à coulissement la plaque (40).

15. Dispositif selon la revendication 1 ou 14, caractérisé en ce que l'évidement est réalisé sous la forme d'une ouverture (47) entourant complètement l'élément en fixation (25, 31).

16. Dispositif selon la revendication 15, caractérisé en ce que le verrou (40, 50) comporte une charnière (43, 53, 54) s'étendant dans la direction du coulissement.

17. Dispositif selon la revendication 16, caractérisé en ce que la charnière (43, 53, 54) s'étend le long de du coutour intérieur de l'ouverture (47).

18. Dispositif selon la revendication 17, caractérisé en ce que l'ouverture est formée par un anneau (53) dont la branche intérieure (54) est suspendue dans un oeillet formé par une partie repliée (52) de la plaque (51).

19. Dispositif selon la revendication 18, caractérisé en ce que l'épaisseur (d) de la branche extérieure de l'anneau est égale à la somme de l'épaisseur de la branche intérieure (54) de l'anneau et de l'épaisseur double de la partie de plaque repliée (52).

**Claims**

1. A device for securing a container, which is provided with lower frame elements (11) of rectangular hollow profile and with lower corner fittings (21) each having a corner opening (28), to fixing members (25, 31), characterized by locking pieces (10, 40, 50) movable within the frame elements (11) and each having a portion (18, 19, 42, 53) adapted to be passed outwards through the corner opening (28) of a corner fitting (21), said portion having a cut-out (13, 47) for engagement with a fixing member (25, 31).

2. The device of claim 1, characterized in that the locking piece is formed as a flat elongated plate (10) having lateral cut-outs (12...14).

3. The device of claim 2, characterized in that the overall width (B) of the plate (10) corresponds to the clear diagonal dimension of the frame element (11), and the width (b) reduced by the depth of the lateral cut-outs (12...14) corresponds to the clear width (β) of the frame element (11).

4. The device of claim 3, characterized in that a longitudinal side of the plate (10) is provided with two cut-outs (12, 13), one (12) of which extends to the rear edge (15) of the plate facing away from the corner fitting (21) and the other (13) has a width corresponding to the fixing member (25, 31).

5. The device of claim 4, wherein the frame element (11) and/or the corner fitting (21) has an edge hole (22) in the outer edge facing away from the container, characterized in that the web (16) formed between the two cut-outs (12, 13 or 12, 14, respectively) of the plate (10) has a width corresponding to the clear length of the edge hole (22).

6. The device of claim 5, characterized in that the plate (10') has three cut-outs (12...14) in the said longitudinal side, two (13, 14) of which form a web (19) engaging between an edge of the corner opening (28) of the corner fitting (21) and the surface of the fixing member (31) facing that edge.

7. The device of any one of claims 2 to 6, characterized in that the underside of the plate (10) has a thick portion (20, 32) provided in the region of the webs (16, 18, 19) formed by the cut-outs (12...14).

8. The device of claim 7, characterized in that the thick portion (20, 32) corresponds to the sum of the material thicknesses of the lower legs of the corner fitting (21) and the frame element (11).

9. The device of claim 7 or 8, characterized in that the thick portion is formed by a nut (32) welded to the underside of the web (18), with a tightening screw (34) being threadable into the nut.

10. The device of any one of claims 2 to 9, characterized in that the plate (10) has an abutment (13) engaging the inner side of the surface of the corner fitting (21) facing away from the frame element (11).

11. The device of claim 10, wherein the corner opening (28) of the corner fitting (21) is formed by quarter-circular arcs, characterized in that the clear radial dimension of the corner opening (28) is smaller than the overall width (B) of the plate (10).

12. The device of any one of claims 4 to 11, characterized in that the longitudinal side of the plate (10') opposite its cut-outs (12, 13) has a corner recess (35) extending to the front edge (17) of the plate.

13. The device of any one of claims 2 to 12, characterized in that the plate (10') has a stiffening rib (36) on its top surface.

14. The device of claim 2, characterized in that the edge of the plate (40, 50) opposite the cut-out for engagement with the fixing member (25, 31) is provided with an integral portion (44, 45) for engagement with the corner fitting (21) in the region of that frame member (22) which extends perpendicularly to the frame member (11) in which the plate (40) is movably received.

15. The device of claim 1 or 14, characterized in that the cut-out is formed as an opening (47) completely surrounding the fixing member (25, 31).

16. The device of claim 15, characterized in that the locking piece (40, 50) includes a hinge (43, 53, 54) extending along the moving direction.

17. The device of claim 16, characterized in that the hinge (43, 53, 54) extends along the inner confining line of the opening (47).

18. The device of claim 17, characterized in that the opening is formed by a ring (53) the inner leg (54) of which is engaged in an eye formed by a folded-back portion (52) of the plate (51).

19. The device of claim 18, characterized in that the thickness (d) of the outer ring leg is equal to the sum of the thickness of the inner ring leg (54) and twice the thickness of the folded-back plate portion (52).

FIG.1

FIG.2

FIG.3

FIG.4

FIG.5

FIG.7

FIG.6

FIG.8

FIG.9

FIG.10

FIG.11

FIG.12

FIG.13